# EUROPÄISCHE PATENTANMELDUNG

(11) **EP 2 980 736 A1**
(43) Veröffentlichungstag der Anmeldung: **03.02.2016**
(21) Anmeldenummer: 14002620.4
(22) Anmeldetag: 28.07.2014
(51) Int. Cl.: G06Q 10/08, G06Q 10/06

(54) **Verfahren zur Herstellung eines Objekts, welches aus einer Vielzahl von Einzelteilen besteht, Konstruktionsmodul und Fertigungssystem**

(71) Anmelder: PFW Aerospace GmbH, 67346 Speyer (DE)
(72) Erfinder: Eitzenberger, Berthold, 67059 Ludwigshafen (DE); Rauch, Sandra, 68259 Mannheim (DE); Harder, Martin, 67346 Speyer (DE)
(74) Vertreter: Hörschler, Wolfram Johannes

(57) **Zusammenfassung**

Die Erfindung betrifft ein computerimplementiertes Verfahren zur Herstellung eines Objekts, welches aus einer Vielzahl von Einzelteilen und Baugruppen besteht, insbesondere eines Luft- oder Raumfahrtkörpers, wobei eine zeitliche Überlappung einer Konstruktionsphase und einer Produktionsphase des Objekts vorliegt, wobei in der Konstruktionsphase zu jedem Einzelteil, zu jeder Baugruppe und zu dem Objekt ein Datensatz (14) erstellt wird, wobei der Datensatz (14) eines jeden Einzelteils und einer jeden Baugruppe als Gewichtstypen jeweils ein Zielgewicht, ein berechnetes Gewicht und ein gewogenes Gewicht ausweisen kann und wobei in der Produktionsphase tatsächliche Einzelteile (28) und tatsächliche Baugruppen (34) angefertigt und gewogen werden. Dabei ist vorgesehen, dass in der Konstruktionsphase Gesamtgewichte (152) der Baugruppen und/oder des Objekts anhand der Datensätze (14) der Einzelteile und Baugruppen ermittelt werden, wobei gewogene Gewichte bevorzugt zu berechneten Gewichten und berechnete Gewichte bevorzugt zu Zielgewichten zur Ermittlung der Gesamtgewichte (152) der Baugruppen und/oder des Objekts verwendet werden, und dass Informationen über Anteile der verwendeten Gewichtstypen an den ermittelten Gesamtgewichten ermittelt und bereitgestellt werden.

Weiterhin werden ein computerimplementiertes Konstruktionsmodul mit Verknüpfungen zu einem Konstruktionssystem (36) für dreidimensionale Darstellung, zum Beispiel CATIA, mit Verknüpfungen zu einem Verwaltungssystem (38) für Produktionsdaten, zum Beispiel SAP, mit Verknüpfungen zu einem Kommunikationssystem (40) für ein Intranet und/oder das Internet, zum Beispiel zu einem Programm zum Versenden und Empfangen von Emails, und mit Verknüpfungen zu einem oder mehreren Fertigungssystemen (10) angegeben, sowie ein Fertigungssystem (10), welche zur Ausführung des Verfahrens eingerichtet sind.

## Beschreibung

### Stand der Technik

Die Erfindung betrifft ein computerimplementiertes Verfahren zur Herstellung eines Objekts, welches aus einer Vielzahl von Einzelteilen besteht, insbesondere eines Luft- oder Raumfahrtkörpers.

Darüber hinaus werden ein Konstruktionsmodul und ein Fertigungssystem angegeben, welche insbesondere zur Durchführung des Verfahrens eingerichtet sind.

Bei der Produktion von Flugzeugen benötigen manche Einzelteile einen großen Vorlauf, zum Beispiel wegen sehr langer Anfertigungszeit, andere hingegen sind schnell verfügbar. Während sich also ein Designer noch bemüht, das Modell des Flugzeugs aus einer Vielzahl von Einzelteilen und Baugruppen zu konstruieren, sind einige der Einzelteile und Baugruppen typischerweise schon bestellt, angefertigt oder zusammengefügt.

Ein Konzept zur Integration von Informationen, die im Verlauf des Lebenszyklus eines Objekts anfallen, ist das sogenannte Produkt-Lifecycle-Management, welches im Falle reiner Produktentwicklung auch als Produktdatenmanagement bezeichnet wird. Die dargestellte Problematik bildet sich im Produkt-Lifecycle-Management des Objekts in einer zeitlichen Überlappung einer Konstruktionsphase und einer Produktionsphase ab, wobei in der Konstruktionsphase zu jedem Einzelteil, zu jeder Baugruppe und zu dem Objekt ein Datensatz erstellt wird und wobei in der Produktionsphase tatsächliche Einzelteile und tatsächliche Baugruppen angefertigt werden. Zu der zeitlichen Überlappung der Konstruktionsphase und der Produktionsphase kommt es insbesondere dann, wenn das Objekt aus einer Vielzahl von Einzelteilen besteht, welche erst einzeln angefertigt, dann zu Baugruppen und schließlich zu dem Objekt zusammengefügt werden. Durch die in der Produktionsphase tatsächlich angefertigten Einzelteile und tatsächlich angefertigten Baugruppen ergeben sich für den Designer in der Konstruktionsphase Einschränkungen bezüglich der weiteren zu konstruierenden Einzelteile und Baugruppen.

Ein spezielles Problem ergibt sich dadurch, dass manche Einzelteile aus Kostengründen nur ein einziges Mal hergestellt werden können. Beispielsweise verspricht der Einsatz von karbonfaserverstärktem Kunststoff (CFK) im Rumpf eines Flugzeugs eine beträchtliche Gewichtseinsparung, ist aber mit dem Nachteil verbunden, dass das entsprechende Einzelteil nach seiner Herstellung im Wesentlichen unveränderlich ist. Handelt es sich um ein sehr großes oder um ein sehr teures Einzelteil aus CFK, so *muss* dieses dann eingesetzt werden, damit die Kosten nicht ausufern. Mögliche Unzulänglichkeiten, beispielsweise in der Statik des betreffenden Einzelteils, werden dann durch zusätzliche Einzelteile, z. B. durch Verstärkungen aufgefangen. Oftmals wird hierdurch das einem Auftraggeber versprochene Gewicht oder ein vorgegebenes Zielgewicht des herzustellenden Objekts nicht eingehalten.

In einem anderen Fall kann es sein, dass beispielsweise verschiedene Einzelteile unterschiedlicher Fertiger nicht zusammenpassen, was Veränderungen nötig macht. Da die Einzelteile stets mit einer gewissen Fertigungstoleranz angefertigt werden, abhängig von den unterschiedlichen technischen Möglichkeiten einzelner Fertiger, müssen die Baugruppen vom Designer für die Funktionen angepasst werden, wodurch ein vorgegebenes Zielgewicht des herzustellenden Objekts überschritten werden kann.

Aus EP 0 290 809 B1 ist ein Verfahren zum präzisen Herstellen und Zusammensetzen eines Gegenstands mit vielen Komponenten, beispielsweise eines Flugzeugs, bekannt. Zunächst wird ein Datenmodell mit einer Konstruktionsdefinition der Flugzeugstruktur erzeugt. Hieraus wird ein Modell mittels einer geeigneten CAD-Software hergestellt. Gleichzeitig wird anhand des Datenmodells mittels automatisch betriebener Modellherstellungsmaschinen ein tatsächliches Modell ausgebildet. Das tatsächliche Modell wird von einem Theodolithen-System ausgemessen und mit dem Datenmodell verglichen. Bei dem Vergleich wird das Datenmodell bezüglich der tatsächlichen räumlichen Parameter der Modellteile aktualisiert. Die Rückkopplung und Aktualisierung über die tatsächliche Messung durch das Theodolithen-System wird nach einem Montageverfahrensschritt, in dem die Einzelteile zusammengesetzt werden, wiederholt und nach der Komplettmontage noch einmal. Während der Hersteller des Flugzeugs von der ursprünglichen Definition zur Endmontage fortschreitet, wird durch das beschriebene Verfahren eine vollständige Entstehungsgeschichte aller Bestandteile und Modelle gespeichert.

Aus DE 10 2009 058 802 A1 ist eine Anwendung zur kombinierten Darstellung eines realen und eines virtuellen Modells beispielsweise eines Flugzeugs im Rahmen einer simultan real und virtuell durchgeführten Produktentwicklung bekannt. Dabei werden Produktinformationen von Modellen aus verschiedenen Datenbanksystemen in ein reales Referenzmodell eingebunden, wobei Unterschiede von Soll- und Ist-Werten zwischen dem realen Modell und dem virtuellen Modell angezeigt werden, insbesondere von Positions- oder Orientierungsdifferenzen, Größenunterschieden oder Helligkeits- oder Farbabweichungen.

Aus DE 10 2007 015 682 ist ein Verfahren zum Generieren digitaler Prototypen komplexer Vorrichtungen, zum Beispiel von Fahrzeugen, bekannt, wobei ein elektronisches Lastenheft geführt wird, das geometrische und funktionelle Attribute des Fahrzeugs aufweist. Anhand dieser Attribute kann ein Zusatzprogramm einen CAD-Datensatz zusammenstellen, um einen digitalen Prototyp zu generieren, wobei unter anderem Algorithmen zur Berechnung des Gesamtgewichts umgesetzt werden. Im Vordergrund stehen hohe Stückzahlen und Massentauglichkeit.

WO 2005/043421 A1 betrifft eine automatische Generation von 3D-CAD-Modellen von Flugzeugen, wobei ein Gesamtmodell aus einer Vielzahl von Einzelmodellen zusammengesetzt wird. Aus dem 3D-Modell werden Informationen über das Gewicht abgeleitet und nach einer Stressanalyse aufgefrischt.

Es ist eine Aufgabe der Erfindung, einem Designer eines Objekts, welches aus einer Vielzahl von Einzelteilen und Baugruppen besteht, insbesondere eines Luft- oder Raumfahrtkörpers, bei einer simultan real und virtuell durchgeführten Produktentwicklung möglichst umfassend über das Objekt zu informieren, so dass dieser frühzeitig notwendige Veränderungen erkennt und möglichst ideale Entscheidungen treffen kann.

### Offenbarung der Erfindung

Die Aufgabe wird gelöst durch ein computerimplementiertes Verfahren, sowie durch ein Konstruktionsmodul und ein Fertigungssystem gemäß den Merkmalen der unabhängigen Ansprüche. Vorteilhafte Weiterbildungen der Erfindung sind Gegenstand der Unteransprüche.

Bei dem erfindungsgemäßen computerimplementierten Verfahren zur Herstellung eines Objekts, welches aus einer Vielzahl von Einzelteilen und Baugruppen besteht, insbesondere eines Luft- oder Raumfahrtkörpers, wobei eine zeitliche Überlappung einer Konstruktionsphase und einer Produktionsphase des Objekts vorliegt, wobei in der Konstruktionsphase zu jedem Einzelteil, zu jeder Baugruppe und zu dem Objekt ein Datensatz erstellt wird, wobei der Datensatz eines jeden Einzelteils und einer jeden Baugruppe als Gewichtstypen jeweils ein Zielgewicht, ein berechnetes Gewicht und ein gewogenes Gewicht ausweisen kann und wobei in der Produktionsphase tatsächliche Einzelteile und tatsächliche Baugruppen angefertigt und gewogen werden, ist vorgesehen, dass in der Konstruktionsphase Gesamtgewichte der Baugruppen und/oder des Objekts anhand der Datensätze der Einzelteile und Baugruppen ermittelt werden, wobei gewogene Gewichte bevorzugt zu berechneten Gewichten und berechnete Gewichte bevorzugt zu Zielgewichten zur Ermittlung der Gesamtgewichte der Baugruppen und/oder des Objekts verwendet werden, und dass Informationen über Anteile der verwendeten Gewichtstypen an den ermittelten Gesamtgewichten ermittelt und bereitgestellt werden.

Vorteilhaft ist daran, dass so früh wie möglich alle bereits vorhandenen Daten der Einzelteile und Baugruppen verwendet werden. Der Designer, welcher mit dem Design des gesamten Objekts oder mit dem Design einer oder mehrerer Baugruppen des Objekts beauftragt ist, kann somit frühzeitig seine Konstruktionsvorgaben ändern, insbesondere um Gewichtsvorgaben einzuhalten oder möglicherweise vorhandene Beschaffungsprobleme aufzudecken.

Durch die frühzeitige Integration der Information über das Gewicht der tatsächlichen Einzelteile und tatsächlichen Baugruppen aus der Produktionsphase kann insbesondere auch Gewicht dadurch eingespart werden, dass eine etwaige Überdimensionierung noch nicht angefertigter Einzelteile einer laufenden Serienproduktion vermieden wird, bei welchen sonst nicht gewichtsreduzierend nachgearbeitet werden könnte (beispielsweise bei CFK) oder bei welchen die Kosten für die Nacharbeit zu hoch sind. Bei Luft- oder Raumfahrtkörpern rentiert sich die Gewichtsverminderung in besonderem Maße, da Kerosin eingespart werden kann und das eingesparte Kerosin nicht selbst transportiert werden muss. Dieser Platz kann beispielsweise durch zusätzliche Nutzlast aufgefüllt werden.

In der Konstruktionsphase und in der Produktionsphase werden nicht nur Einzelteile und tatsächliche Einzelteile des Objekts angefertigt, sondern diese auch zu Baugruppen gruppiert und gegebenenfalls zusammengefügt. Eine Baugruppe kann ein einzelnes, aus zusammengefügten Einzelteilen bestehendes Objekt sein, oder sie kann lose Einzelteile aufweisen. Eine Baugruppe kann auch ausschließlich lose Einzelteile aufweisen, beispielsweise, wenn auftragsgemäß eine Gruppe von Einzelteilen zusammen ausgeliefert werden sollen. Typischerweise nach Art einer Baumstruktur werden mehrere dieser Baugruppen über mehrere Hierarchieebenen hinweg zu übergeordneten Baugruppen gruppiert und dabei gegebenenfalls zusammengefügt, bis diese schließlich zu dem Objekt zusammengefügt werden. Für viele und bevorzugt für jede dieser Baugruppen existiert ein Datensatz, welcher in der Konstruktionsphase erstellt wird, und welcher die erfindungsgemäßen Gewichtstypen ausweist. Das Objekt bildet die oberste Baugruppe in der Baumstruktur.

Mit den Maßnahmen der Erfindung werden Anteile von Zielgewichten, berechneten Gewichten und gewogenen Gewichten untergeordneter Baugruppen und Einzelteile am Gesamtgewicht einer Baugruppe, oder des Objekts als oberste Baugruppe, ermittelt und bereitgestellt. Die Informationen über die Anteile der verwendeten Gewichtstypen an den ermittelten Gesamtgewichten können beispielsweise Angaben von Zahlenwerten umfassen, Prozentangaben, aber auch grafische Darstellungen wie zeitliche Funktionen, Balkendiagramme, Säulendiagramme, Kreisdiagramme oder Ähnliches, aus welchen die Informationen unmittelbar ablesbar oder zumindest ableitbar sind,.

Eine Information "bereitstellen" bedeutet in diesem Zusammenhang beispielsweise die Weitergabe der Information an eine Ausgabeschnittstelle, die mit einer Anzeigevorrichtung oder mit einem Drucker verbunden sein kann. Die Information bereitstellen kann aber auch bedeuten, die Informationen in einen flüchtigen oder nicht-flüchtigen Speicher abzulegen, auf den weitere Computereinrichtungen bzw. Anwendungen zugreifen können.

Bei der Berechnung des Gesamtgewichts von Baugruppen oder vom Objekt wird per Definition, d. h. mittels einer Vorrangsregelung zunächst auf die gewogenen Gewichte der tatsächlich gefertigten Einzelteile zugegriffen, falls dieses nicht vorhanden ist, auf das berechnete Gewicht, und falls auch dieses nicht vorhanden ist, auf das Zielgewicht oder auch auf einen Standardwert. Das Zielgewicht zu einem Einzelteil oder einer Baugruppe ist dabei als eine Art Leitlinie für das Design vorgegeben. Als vorläufiger Wert in der Konstruktionsphase, d. h. solange für das Einzelteil oder die Baugruppe noch kein dreidimensionales Modell mit Definition der Materialdichte oder ein entsprechendes gewogenes Gewicht vorliegen, wird das Zielgewicht des Einzelteil oder der Baugruppe zur Berechnung des Gesamtgewichts verwendet.

Sind kein Zielgewicht und kein Standardwert vorhanden, dann wird bei dem betroffenen Einzelteil ein fehlendes Gewicht angezeigt. Verhindert dieses fehlende Einzelteilgewicht die Berechnung des Gesamtgewichts, da es nicht durch ein bekanntes Gewicht einer der übergeordneten Baugruppen, in die es einfließt kompensiert wird, dann weist der Datensatz in diesem Fall für das Gewicht dieses Einzelteils ein fehlendes Gewicht mit dem Hinweis der erforderlichen Angabe für das Gesamtgewicht aus.

Nach einer bevorzugten Ausführungsform ist in jedem Datensatz je ein Feld für das Zielgewicht, das berechnete Gewicht und das gewogene Gewicht vorgesehen. Im Datensatz ist für das "Gewicht" also bevorzugt ein vektorielles Feld (array) vorgesehen, so dass eine mehrfache Definition des "Gewichts" möglich ist.

Nach einer Ausführungsform weist auch der Datensatz des Objekts ein Zielgewicht aus. Bevorzugt werden Informationen über das Verhältnis des ermittelten Gesamtgewichts des Objekts zum Zielgewicht des Objekts ermittelt und bereitgestellt. Insbesondere kann eine farbliche Hervorhebung der Information vorgesehen sein, wenn das Gesamtgewicht das Zielgewicht überschreitet.

Weiterhin können Informationen
über das Verhältnis einer Anzahl der Einzelteile und Baugruppen, deren gewogene oder berechnete Gewichte vorliegen, zu einer Gesamtanzahl der Einzelteile und Baugruppen und/oder
über das Verhältnis einer Anzahl der Einzelteile und Baugruppen, deren gewogene Gewichte vorliegen, zu der Gesamtanzahl der Einzelteile und Baugruppen und/oder
über das Verhältnis der Anzahl der Einzelteile und Baugruppen, deren gewogene oder berechnete Gewichte vorliegen, zu der Anzahl der Einzelteile und Baugruppen, deren gewogene Gewichte vorliegen
ermittelt und bereitgestellt werden.

Auch hieraus ableitbare Informationen können ermittelt und bereitgestellt werden, beispielsweise mit einer Anzahl von Einzelteilen und Baugruppen, deren gewogenes Gewicht *nicht* vorliegt. Die Information kann in der Art und Weise wie zuvor beschrieben bereitgestellt werden.

Vorteilhaft werden mit den Maßnahmen der Erfindung neuartige Indikatoren für den Reifegrad des Projekts, d. h. der Herstellung des Objekts geschaffen, auch bezeichnet als KPIs (Key Performance Indicators). Die neuartigen KPIs erlauben Rückschlüsse über wichtige Eckdaten der Realisierung, wie zum Beispiel den Status der Umsetzung bezüglich geplantem Projektfortschritt für Bauunterlagen und Fertigung der Produkte, den Status einer Designreife, den Status einer Herstellbarkeitsprüfung durch den Fertiger, den Status einer Beschaffbarkeitsprüfung aller für die Fertigung benötigten Materialien durch den Einkauf, den Status des Gesamtgewichts und der Gewichtsreife und den Status der Gesamtkosten und der Kostenreife. Die neuartigen KPIs erlauben eine größtmögliche Transparenz des Projekts und verbessern insbesondere die Möglichkeiten externer Validierung des Projekts enorm, da die Darstellung der KPIs als Historienkurve eine Planung in die Zukunft erlaubt und damit unter anderem hilft, Fehlentwicklungen bezüglich Termin, Reife, Gewicht und Kosten zu stoppen.

Im Sinne der Erfindung ist es vorteilhaft, das Gesamtgewicht auch der noch nicht tatsächlich angefertigten Einzelteile und Baugruppen möglichst genau zu berechnen, um frühzeitig entscheiden zu können, ob eine Veränderung im Design nötig ist. Typischerweise wird das Gewicht eines Einzelteils anhand von Werten berechnet, die das Gewicht des Einzelteils bestimmen. Die Werte, die das Gewicht des Einzelteils bestimmen, umfassen beispielsweise Angaben zu Materialien, Volumina, Dichten und Flächen des Einzelteils. Außerdem können gemäß einer Ausführungsform Gewichtsveränderungen berücksichtigt werden, welche durch eine Bearbeitung von Teilflächen oder der gesamten Fläche des Einzelteils entstehen, insbesondere etwa durch Lackierungen oder andere Formen der Oberflächenbehandlung.

Die Datensätze der Einzelteile werden bevorzugt über ein Konstruktionssystem für eine dreidimensionale Darstellung, das im Rahmen der Erfindung auch kurz als CAD-Applikation bezeichnet sein kann, zum Beispiel CATIA, und/oder über ein Verwaltungssystem für Produktionsdaten, insbesondere eine Verwaltungssoftware für Produkte, Fertigungsverfahren und Lagerbestand, zum Beispiel SAP, und/oder über manuelle Eingaben im System gespeist.

In einigen Fällen kann anhand der vom Designer eingegebenen Daten des Einzelteils vom System erkannt werden, dass es sich um ein verfügbares Standardeinzelteil handelt oder dass es sich um ein bekanntes Einzelteil handelt, zum Beispiel aus einer Produktionsphase eines ganz anderen Objekts. In solchen Fällen kann das gewogene Gewicht des betroffenen Einzelteils bereits bekannt sein. In einigen Ausführungsformen der Erfindung integriert das Konstruktionsmodul diese Daten in den Datensatz des betroffenen Einzelteils und verwendet sie als gewogenes Gewicht des Einzelteils.

Weiterhin ist vorgesehen, dass ein in der Produktionsphase gewogenes Gewicht eines tatsächlich angefertigten Einzelteils oder einer tatsächlich angefertigten Baugruppe in den entsprechenden Datensatz manuell eingebbar ist oder automatisch rückeingespeist wird. Das manuelle Eingeben erfolgt typischerweise zum Beispiel bei Großprojekten wie Flugzeugen oder Raumfahrtkörper, etwa Raketen. Die Daten können aber auch vollautomatisch ermittelt und in den entsprechenden Datensatz rückeingespeist werden, beispielsweise durch eine Vermessungseinrichtung, welche das Einzelteil oder die Baugruppe wiegt, ggf. räumlich vermisst und die ermittelten Daten dem Konstruktionsmodul übergibt, welches dessen Datensatz entsprechend aktualisiert. Außerdem kann nach entsprechender Vermessung eine Einspeisung von Informationen in den entsprechenden Datensatz über weitere gewichtsrelevante Parameter wie Materialstandard, Materiallegierung und Materialdichte erfolgen, sowie gegebenenfalls von räumlichen Parametern.

In der Produktionsphase werden die tatsächlichen Einzelteile und/oder die tatsächlichen Baugruppen anhand der Datensätze hergestellt, wobei dies vollautomatisch, semiautomatisch oder manuell erfolgen kann. Bei der Produktion von Großflugzeugen werden anhand der Datensätze typischerweise technische Zeichnungen hergestellt, nach denen von Hand oder maschinell gefertigt werden kann. Eine vollautomatische Herstellung der tatsächlichen Einzelteile und/oder Baugruppen kann beispielsweise durch Anwendung eines Rapid Prototyping erfolgen, wobei Maschinen anhand der Datensätze die Herstellung automatisch übernehmen. Die vollautomatische Herstellung kann beispielsweise wie in der oben genannten EP 0 290 809 B1 oder DE 10 2007 015 682 A1 beschrieben erfolgen. Ein weiteres Beispiel von typischerweise außerhalb der Flugzeugtechnologie ist ein vollintegrierter 3D-Drucker mit einem Konstruktionsmodul und einer Vermessungseinrichtung, beispielsweise ein SLM-System (SLM, *selective laser melting).*

Nach einer bevorzugten Ausführungsform der Erfindung wird bei der Ermittlung der Gesamtgewichte der Baugruppen und/oder des Objekts das Gewicht von zu untergeordneten Baugruppen gruppierten Einzelteilen anstelle des Gewichts der betroffenen Einzelteile verwendet. Eine Baugruppe wird nach ihrer Herstellung entsprechend wie die Einzelteile gewogen, ggf. räumlich vermessen, und die erhaltenen Daten wie beschrieben in den entsprechenden Datensatz eingespeist.

Bei der Ermittlung der Gesamtgewichte der Baugruppen und/oder des Objekts ersetzt also das gewogene Gewicht von untergeordneten Baugruppen das Gewicht der betroffenen Einzelteile, die der untergeordneten Baugruppe zugeordnet sind. Für den Fall aber, dass gewogene Gewichte von Einzelteilen innerhalb einer untergeordneten Baugruppe vorliegen, werden im Sinne der Erfindung stets die gewogenen Gewichte der Einzelteile, ggf. zusammen mit noch nicht gewogenen Gewichten einiger Einzelteile, verwendet und es erfolgt noch keine Berücksichtigung der Baugruppe bei der Berechnung des Gesamtgewichts. Auf diese Weise werden dem Designer stets die reifsten Daten *(best mature)* bereitgestellt, damit dieser ideale Entscheidungen treffen kann.

Bezüglich der Baugruppen gelten im Wesentlichen die gleichen Preferenzen und Aussagen, wie sie bezüglich der Einzelteile getroffen werden, beispielsweise dass diese vollautomatisch, semiautomatisch oder manuell hergestellt werden können und dass die gewogenen Gewichte der Baugruppen manuell eingebbar sind oder automatisch eingespeist werden. Aus der Information über das Verhältnis der Anzahl von Einzelteilen zu der Anzahl von Baugruppen kann als weiterer KPI beispielsweise ein Agglomerationsgrad des Objekts angegeben werden.

Ein gewogenes Gewicht einer zusammengefügten Baugruppe wird im Rahmen der Erfindung jedem anderweitig berechneten Eintrag des Gewichts der Baugruppe vorgezogen. Dennoch ist es im Sinne der Erfindung vorteilhaft, auch das Gewicht der noch nicht tatsächlich angefertigten Baugruppen möglichst genau zu bestimmen, um frühzeitig entscheiden zu können, ob eine Veränderung im Design nötig ist. Eine beispielsweise mit einer neuen Technik zusammengefügte Baugruppe kann ein ganz anderes Gewicht aufweisen als geplant und kann sowohl leichter als auch schwerer sein, als mit alter Technik.

Bevorzugt werden daher bei der Ermittlung des Gesamtgewichts der Einzelteile Gewichtsveränderungen durch Zusammenfügungen der Einzelteile berücksichtigt. Ein bevorzugter Ansatz hierzu ist der Folgende: Typischerweise weist ein Datensatz eines Einzelteils topologische Eigenschaften dieses Einzelteils bezüglich weiterer Einzelteile aus. Alternativ hierzu oder zusätzlich hierzu definiert der Datensatz einer Baugruppe die topologischen Eigenschaften der Einzelteile innerhalb der Baugruppe. Diese topologischen Eigenschaften betreffen insbesondere Ecken, Kanten oder Flächen von Einzelteilen, welche mit entsprechenden Ecken, Kanten oder Flächen der weiteren Einzelteile verbunden sind oder verbunden werden sollen. Die Gewichtsveränderungen durch Zusammenfügungen der Einzelteile werden dadurch berücksichtigt, dass der Datensatz des Einzelteils oder der Baugruppe Zusammenfügeoptionen ausweist. Die Zusammenfügeoptionen können in die topologischen Eigenschaften der Einzelteile oder Baugruppe eingeordnet sein. Zusammenfügeoptionen umfassen zum Beispiel, ob eine Schweißverbindung, eine Lötverbindung, eine Klebeverbindung, eine Schraubverbindung oder eine Nietverbindung vorgesehen ist. Besonders bevorzugt ist im Datenfeld der Zusammenfügeoption auch ein freier Eintrag erlaubt, welcher eine neuartige Technik spezifizierbar macht.

Bei der Ermittlung des Gesamtgewichts kann dann beispielsweise die Länge von Fügelinien, zum Beispiel von Schweißnähten, die Fläche von Fügeflächen, zum Beispiel von Klebeflächen, die Anzahl von Lötstellen, das Gewicht von Schraub- und Nietverbindungen usw. berücksichtigt werden. Auch dem freien Eintrag für neue Technik wird ein manuell eingebbares Gewicht zugeordnet. Somit wird eine neue Technik der Zusammenfügung im Rahmen der Erfindung auf wenig komplizierte Weise spezifizierbar.

Ein erfindungsgemäßes computerimplementiertes Konstruktionsmodul zum Einsatz bei einer Herstellung eines Objekts, welches aus einer Vielzahl von Einzelteilen besteht, insbesondere eines Luft- oder Raumfahrtkörpers, bei dessen Herstellung eine zeitliche Überlappung einer Konstruktionsphase und einer Produktionsphase des Objekts vorliegt, umfasst
einen Datensatz zu jedem Einzelteil, zu jeder Baugruppe und zu dem Objekt, wobei der Datensatz eines jeden Einzelteils und einer jeden Baugruppe als Gewichtstypen jeweils ein Zielgewicht, ein berechnetes Gewicht und ein gewogenes Gewicht ausweisen kann, und
einen Gesamtgewichtsermittler, welcher eingerichtet ist, das heißt welcher entsprechende Programmbefehle aufweist, Gesamtgewichte der Baugruppen und/oder des Objekts anhand der Datensätze der Einzelteile und Baugruppen zu ermitteln,
wobei der Gesamtgewichtsermittler gewogene Gewichte bevorzugt zu berechneten Gewichten und berechnete Gewichte bevorzugt zu Zielgewichten zur Ermittlung der Gesamtgewichte der Baugruppen und/oder des Objekts verwendet, und
welcher eingerichtet ist, Informationen über Anteile der verwendeten Gewichtstypen an den ermittelten Gesamtgewichten zu ermitteln und bereitzustellen.

Das computerimplementierte Konstruktionsmodul wird dabei auf einer programmierbaren Computereinrichtung ausgeführt.

Das Konstruktionsmodul weist bevorzugt außerdem einen Aktualisierer auf, der eingerichtet ist die Datensätze zumindest bezüglich berechneter und gewogener Gewichte zu aktualisieren. Bevorzugt ist der Aktualisierer eingerichtet die Datensätze der Einzelteile und/oder Baugruppen bezüglich aller vorhandenen Daten zu aktualisieren und alle Änderungen zum letzten Datenstand anzuzeigen und zu speichern.

Die Anzeige der Änderungen zum letzten Datenstand oder zu vorigen Datenständen erfolgt beispielsweise über eine Statusanzeige pro Einzelteil und/oder Baugruppe, zum Beispiel als "gelöscht", "neu" oder "geändert", wobei einzelne geänderte Inhalte eines Datensatzes durch zum Beispiel farbliche Markierung zur besseren Übersicht hervorgehoben werden. Die Anzeige der Änderungen ist beispielsweise als ein Vergleich implementiert, der als Übersicht für alle verknüpften Einzelteile und Baugruppen auf der der Ebene der Objekte der obersten Baugruppen zwischen veralteten und aktuellen Auswertungen des Objektes stattfinden kann, oder als ein Vergleich, welcher zwischen verschiedenen Objekten stattfinden kann.

Mit dem computerimplementierten Konstruktionsmodul können Datensätze erzeugt und verwaltet werden, die eine papierlose Fertigung ermöglichen, ohne zusätzliche zweidimensionale Bauunterlagen wie zum Beispiel Zeichnungen und Stücklisten erstellen zu müssen.

Das computerimplementierte Konstruktionsmodul weist beispielsweise Verknüpfungen zu einem oder mehreren Konstruktionssystemen für eine dreidimensionale Darstellung auf, zum Beispiel CATIA, aus denen Daten, zum Beispiel Volumina, Oberflächen oder Abmessungen, in die Datensätze der Einzelteile und Baugruppen übernommen werden können.

Das computerimplementierte Konstruktionsmodul weist zusätzlich hierzu oder alternativ hierzu beispielsweise Verknüpfungen zu einer oder mehreren Verwaltungssystemen für Produktionsdaten auf, zum Beispiel SAP, aus denen Daten, zum Beispiel freigegebene Prozesse, Lagerbestände, Lieferzeiten oder Preise, in die Datensätze der Einzelteile und Baugruppen übernommen werden können.

Die übernommenen Daten können beispielsweise im Objekt der obersten Baugruppe zur Kontrolle und Optimierung der Kosten, Gewichte, Herstellbarkeit und der Materialbeschaffung zusammengeführt werden.

Das computerimplementierte Konstruktionsmodul weist bevorzugt ein Modul auf, welches die Verknüpfung von relevanten Parametern wie Materialstandard, Materiallegierung, Materialdichte oder weiteren Materialkennwerten, wie zum Beispiel Festigkeit oder Zugfestigkeit, im Zuge einer Erstanwendung eines entsprechenden Datensatzes zu speichern erlaubt, um diese bei weiteren Anwendungen für andere Datensätze als Suchmatrix zu verwenden. Als eine Erstanwendung wird dabei verstanden, dass ein Einzelteil vom Designer neu angelegt und mit relevanten Parametern definiert wird. Das neu angelegte und neu definierte Einzelteil steht dem Designer also bei einer Zweitanwendung, wenn also ein weiteres Einzelteil angelegt wird, zur Verfügung.

Dabei kann bei der Zweitanwendung vorgesehen sein, dass beispielsweise die Angabe einer benötigten Mindestfestigkeit oder Mindestzugfestigkeit direkt zu einer passenden Auswahl von in der Verwaltungssoftware gelisteten Einzelteilen führt und/oder dass die Angabe einer Materiallegierung direkt zu einer passenden Auswahl von in der Verwaltungssoftware gelisteten Einzelteilen führt.

Außerdem kann zum Beispiel ein vorgegebenes Zielgewicht und eine Mindestfestigkeit oder Mindestzugfestigkeit als Randbedingungen über ein gegebenes Volumen des dreidimensionalen Models und im System hinterlegten Materialdaten der bisher verwendeten Materialien aller Erstanwendungen automatisch eine optimierte Vorauswahl ermöglichen.

Weiterhin kann vorgesehen sein, dass aus einer mit der Materiallegierung verknüpften Materialdichte und einem Volumen mittels der dreidimensionalen Konstruktionssoftware automatisch das Gewicht berechnet und im Datensatz des Einzelteils hinterlegt wird.

Weiterhin kann vorgesehen sein, dass die Angabe eines Materialstandards zur automatischen Übernahme der verknüpften Daten aus der Suchmatrix, etwa Materiallegierung, Materialdichte und Materialkennwerte, führt, wobei mit dem Volumen aus der dreidimensionalen Konstruktionssoftware automatisch das berechnete Gewicht berechnet und im Datensatz des Einzelteils hinterlegt wird.

Das computerimplementierte Konstruktionsmodul weist bevorzugt ein Modul auf, welches eine Ausgabe angepasster Daten aus den Datensätzen der Einzelteile und Baugruppen in Form einer Kurzbeschreibung mit relevanten Daten, und gegebenenfalls mit einer Abbildung der dreidimensionalen Ansicht des Einzelteils oder der Baugruppe, für an der Erstellung oder Bewertung der Datensätze beteiligte Personen ermöglicht, beispielsweise Personen aus einer Designabteilung, einer Fertigungsabteilung, einer Einkaufsabteilung, einer Gewichtsabteilung, einer Kostenabteilung und einer Projektleitungsabteilung.

Für den auf Gewicht optimierten Konstruktionsprozess für Einzelteile und Baugruppen (Gewichtsabteilung) werden dabei bevorzugt alle Gewichtstypen aus den Datensatz, d. h. das gewogene Gewicht, berechnete Gewicht und Zielgewicht angezeigt, sowie die prozentuale Verteilung aller Gewichtstypen auf das angezeigte Gesamtgewicht einer Baugruppe oder des Objekts. Für den auf Kosten optimierten Konstruktionsprozess für Einzelteile und Baugruppen (Kostenabteilung) werden dabei bevorzugt der Kostenunterschied zwischen Zielkosten und kalkulierten Kosten, ermittelt aus den im Datensatz definierten Prozessen und Materialien, angezeigt. Für den auf Herstellbarkeit optimierten Konstruktionsprozess für Einzelteile und Baugruppen (Fertigungsabteilung) werden die Prozesse und Materialien, sowie das Ergebnis der Herstellbarkeitsüberprüfung der Fertigung aus dem Datensatz angezeigt. Für den auf Beschaffbarkeit optimierten Konstruktionsprozess für Einzelteile und Baugruppen (Einkaufsabteilung) werden die Prozesse und Materialien sowie das Ergebnis der Beschaffbarkeitsüberprüfung des Einkaufs aus dem Datensatz angezeigt. Für die Projektleitungsabteilung werden die KPI-Kurven (*Key Performance Indicator)* als Funktion über die Zeit bezüglich der prozentualen und tatsächlichen Menge der angelegten Daten für Designreife, Gewicht, Kosten, Fertigbarkeit, Beschaffbarkeit in Bezug zur Menge der angelegten Einzelteile und Baugruppen angezeigt.

Das computerimplementierte Konstruktionsmodul weist bevorzugt ein Modul auf, welches eine automatische Information aller an der Erstellung oder Bewertung der Datensätze beteiligten Personen, insbesondere Personen aus der Designabteilung, Fertigungsabteilung, Einkaufsabteilung, Gewichtsabteilung, Kostenabteilung und Projektleitungsabteilung, bei jeder Änderung des Inhalts der Datensätze, beispielsweise bei Abgabe eines OK des Designers, eines Vorab-OK eines firmeninternen Fertigers oder Einkäufers oder bei der Ablösung der Daten durch Realdaten, über ein Kommunikationssystem für ein Intranet und/oder das Internet ermöglicht, beispielsweise über ein Programm zum Versenden und Empfangen von Emails. Dabei ist bevorzugt vorgesehen, dass alle diese Personen jederzeit einen Kommentar zum Inhalt der Datensätze in diesen Datensätzen speichern und als Text eines gekoppelten Kommunikationsträgers, beispielsweise Email, automatisch an alle beteiligten Personen aus Designabteilung, Fertigungsabteilung, Einkaufsabteilung, Gewichtsabteilung, Kostenabteilung und Projektleitungsabteilung schicken können. Weiterhin ist bevorzugt vorgesehen, dass alle diese Personen jederzeit einen Link zu Dateien bezüglich Anhängen zum Inhalt der Datensätze in diesen Datensätzen speichern und als Text der gekoppelten Email automatisch an alle beteiligten Personen schicken können.

Das computerimplementierte Konstruktionsmodul erlaubt der Projektleitungsabteilung (Projektleitung) somit vorteilhaft die Kontrolle und Steuerung mit Bezug zu Terminen als KPI-Historien, die in Form von Werten und Graphen ausgegeben werden können.

Das computerimplementierte Konstruktionsmodul kann beispielsweise ein Softwaremodul, eine Softwareroutine oder eine Softwaresubroutine und auf einem maschinenlesbaren Speichermedium gespeichert sein, etwa auf einem permanenten oder wiederbeschreibbaren Speichermedium oder in Zuordnung zu einer Computereinrichtung, beispielsweise auf einem tragbaren Speicher wie einer CD-ROM, einer DVD, einer Blu-ray-Disc, einem USB-Stick oder einer Speicherkarte. Zusätzlich oder alternativ dazu kann das computerimplementierte Konstruktionsmodul auf einer Computereinrichtung, etwa auf einem Server oder einem Cloud Server, zum Herunterladen bereitgestellt werden, beispielsweise über ein Datennetzwerk wie das Internet oder über eine Kommunikationsverbindung wie eine Telefonleitung oder eine Drahtlosverbindung.

Bevorzugt ist das Konstruktionsmodul zur Durchführung der hierin beschriebenen computerimplementierten Verfahren ausgebildet und/oder eingerichtet. Dementsprechend gelten die im Rahmen der Verfahren beschriebenen Merkmale entsprechend für das Konstruktionsmodul und umgekehrt die im Rahmen des Konstruktionsmoduls beschriebenen Merkmale entsprechend für die Verfahren.

Die Einheiten des Konstruktionsmoduls, beispielsweise der Gesamtgewichtsermittler, der Aktualisierer und die beschriebenen Module, sind als funktionale Einheiten zu verstehen, die nicht notwendigerweise physikalisch voneinander getrennt sind. So können mehrere Einheiten des Konstruktionsmoduls in einer einzigen physikalischen Einheit realisiert sein, etwa wenn mehrere Funktionen in Software implementiert sind. Weiterhin können die Einheiten des Konstruktionsmoduls auch in Hardware, beispielsweise durch Anwendung spezifischer integrierter Schaltkreise (z. B. ASIC, *Application Specific Integrated Circuit,* oder Microcontroller), bzw. in Speichereinheiten, realisiert sein. Bevorzugt sind insbesondere der Gesamtgewichtsermittler und der Aktualisierer als Software im Konstruktionsmodul implementiert. Weiterhin bevorzugt weist das Konstruktionsmodul Verknüpfungen zu einem oder mehreren der im Folgenden beschriebenen Fertigungssystemen auf.

Erfindungsgemäß wird außerdem ein Fertigungssystem zur Herstellung eines Objekts, welches aus einer Vielzahl von Einzelteilen besteht, insbesondere eines Luft- oder Raumfahrtkörpers, zur Verfügung gestellt, wobei das Fertigungssystem eine programmierbare Computereinrichtung umfasst, welche ein derartiges computerimplementiertes Konstruktionsmodul aufweist.

Bevorzugt weist das Fertigungssystem eine Vermessungseinrichtung auf, welche zumindest dazu eingerichtet ist, tatsächliche Einzelteile und tatsächliche Baugruppen zu wiegen und einem Benutzer die gewogenen Gewichte digital oder analog anzuzeigen und/oder die Messwerte oder Daten der programmierbaren Computereinrichtung, insbesondere dem computerimplementierten Konstruktionsmodul, rückeinzuspeisen.

Der Aktualisierer ist eingerichtet, die Datensätze der Einzelteile und/oder Baugruppen bezüglich ausgewiesener Gewichte zu aktualisieren, wenn von der Vermessungseinrichtung gewogene Gewichte der tatsächlich angefertigten Einzelteile und/oder Baugruppen bereitgestellt werden. Der Aktualisierer empfängt dabei die Daten oder Messwerte von der Vermessungseinrichtung digital oder empfängt manuell eingegebene Daten. Der Aktualisierer ruft nach erfolgter Aktualisierung der Datensätze außerdem bevorzugt den Gesamtgewichtsermittler auf, woraufhin ein Update-Vorgang erfolgt, das heißt ein Auffrischungsvorgang bezüglich zumindest bezüglich berechneter und gewogener Gewichte der Einzelteile und Baugruppen, im Zuge dessen auch alle weiteren vorhandenen Daten mit Anzeige der Änderungen aktualisiert werden können.

Die Vermessungseinrichtung ist bevorzugt außerdem dazu eingerichtet, weitere Daten, insbesondere zum Beispiel die räumlichen Parameter, d. h. die dreidimensionale Ausdehnung der tatsächlich angefertigten Einzelteile und/oder Baugruppen festzustellen und diese ebenso wie die Gewichte einem Benutzer anzuzeigen oder der programmierbaren Computereinrichtung rückeinzuspeisen.

Der Aktualisierer ist dabei entsprechend eingerichtet, die Datensätze der Einzelteile und/oder Baugruppen auch bezüglich der weiteren Daten zu aktualisieren, wenn diese von der Vermessungseinrichtung bereitgestellt werden.

Das Fertigungssystem umfasst nach einer Ausführungsform eine Produktionseinrichtung, welche tatsächliche Einzelteile und tatsächliche Baugruppen anhand der entsprechenden Datensätze anfertigt. Die Produktionseinrichtung stellt die tatsächlich angefertigten Einzelteile und Baugruppen der Vermessungseinrichtung bereit. Die Vermessungseinrichtung kann in die Produktionseinrichtung integriert sein.

Das Fertigungssystem umfasst nach einer Ausführungsform eine Zusammenfügeeinrichtung, welche tatsächlich angefertigte Einzelteile zu Baugruppen und/oder mehrere Baugruppen zu übergeordneten Baugruppen zusammenfügt. Die Vermessungseinrichtung kann in die Zusammenfügeeinrichtung integriert sein. Außerdem können die Vermessungseinrichtung, die Produktionseinrichtung und die Zusammenfügeeinrichtung in eine Gesamteinrichtung integriert sein.

Die Aktualisierung durch die Vermessungseinrichtung und den Aktualisierer wird bevorzugt nach den Montageverfahrensschritten wiederholt, in denen die Einzelteile zu den Baugruppen zusammengefügt werden.

### Kurze Beschreibung der Zeichnungen

In den nachfolgenden Zeichnungen sind Ausführungsbeispiele der Erfindung dargestellt. Dabei sind die im Folgenden beschriebenen Ausführungsbeispiele für den Gegenstand der Erfindung nicht als einschränkend aufzufassen. Dem Fachmann wird eine Vielzahl von Abwandlungen ersichtlich sein, welche im Rahmen der Patentansprüche möglich sind.

Es zeigen:
- Figur 1: ein erfindungsgemäßes Fertigungssystem,
- Figur 2: ein Flussdiagramm zur Darstellung von Arbeitsabläufen in einer Konstruktionsphase eines Objekts, und
- Figur 3-5: Diagramme zur Darstellung eines Reifegrades eines Objekts.

### Detaillierte Beschreibung der Figuren

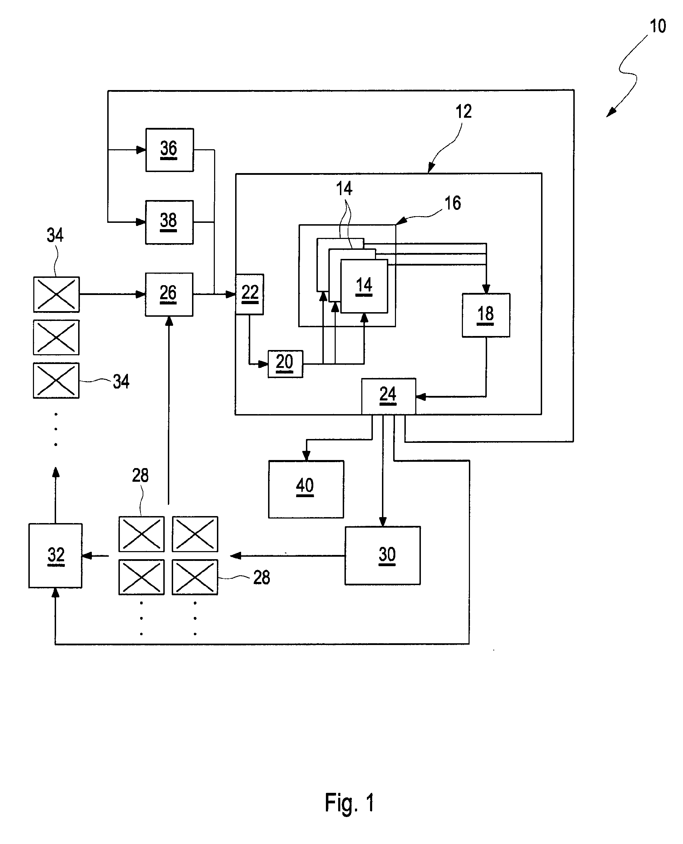

Figur 1 zeigt ein Fertigungssystem 10 mit einer programmierbaren Computereinrichtung 12, einer Vermessungseinrichtung 26, einer Produktionseinrichtung 30 und einer Zusammenfügeeinrichtung 32.

Das Fertigungssystem 10 dient der Herstellung eines Objekts, welches aus einer Vielzahl von Einzelteilen und Baugruppen besteht, welche beispielsweise Einzelteile eines Luftfahrtkörpers oder eines Raumfahrtkörpers sind.

Die programmierbare Computereinrichtung 12 ist eine beliebige Computereinrichtung 12, welche im Wesentlichen zumindest einen Prozessor mit einem Arbeitsspeicher, beispielsweise einem *RAM-(Random Access Memory*)-Speicher, aufweist, wodurch Befehle gespeichert und abgearbeitet werden. Die programmierbare Computereinrichtung 12 kann beispielsweise bekannte Server-Client-Technologie und/oder Cloud-Technologie umfassen, Industrierechner, PCs, aber auch ein Smartphone, ein Tablet oder Ähnliches sein.

Die programmierbare Computereinrichtung 12 umfasst einen nicht-flüchtigen Speicher 16, beispielsweise einen ROM-(*Read-Only* Memory)-Speicher, in welchem Datensätze 14 zu den Einzelteilen, zu den Baugruppen und zu dem Objekt gespeichert sind.

Die Datensätze 14 der Einzelteile und Baugruppen umfassen insbesondere räumliche Parameter, insbesondere Volumina, Flächenmaße, topologische Eigenschaften der Einzelteile und Baugruppen zueinander, aber auch Zusammenfügeoptionen, wie Schweißverbindungen, Lötverbindungen, Schraub- und Nietverbindungen, Klebeverbindungen, und Angaben zu Material, Dichte und Gewicht.

Die programmierbare Computereinrichtung 12 umfasst außerdem eine Eingabeschnittstelle 22, über welche die Datensätze 14 erstellt werden können und über welche insbesondere ein in der Produktionsphase gewogenes Gewicht eines tatsächlich angefertigten Einzelteils 28 oder einer tatsächlich angefertigten Baugruppe 34 in den jeweiligen Datensatz 14 eingebbar ist. Insbesondere können über die Eingabeschnittstelle 22 die Datensätze über ein Konstruktionssystem 36 für die dreidimensionale Darstellung, zum Beispiel CATIA, und/oder über ein Verwaltungssystem 38 für Produktionsdaten, zum Beispiel SAP, sowie über manuelle Eingaben im System gespeist werden.

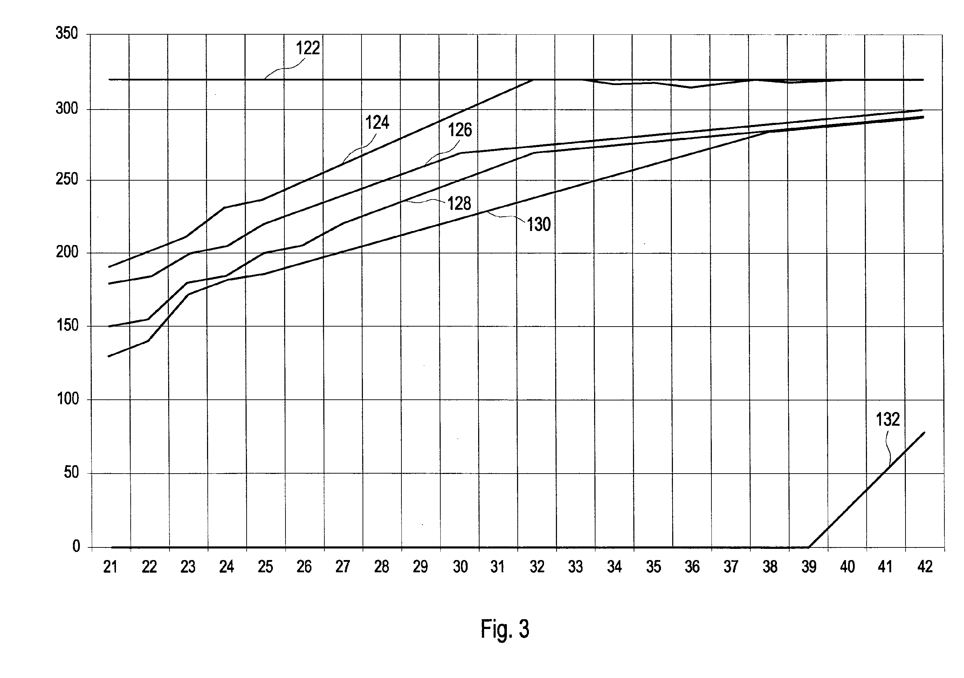

Die programmierbare Computereinrichtung 12 umfasst außerdem eine Ausgabeschnittstelle 24, welche beispielsweise an Anzeigevorrichtungen oder Drucker (nicht dargestellt) gekoppelt ist, über welche die Informationen aus den Datensätzen 14 dargestellt werden können. Beispielsweise können dabei Informationen wie in Figuren 3 - 5 dargestellt werden. Derartige Anzeigevorrichtungen können zweckmäßigerweise auch Ansichten, insbesondere 3D-Ansichten, der Einzelteile, Baugruppen und des gesamten Objekts erzeugen. Insbesondere können über die Ausgabeschnittstelle 24 automatische Darstellungen der einzelnen Datensätze 14 in Form einer Kurzbeschreibung mit allen relevanten Daten und einer Abbildung der dreidimensionalen Ansicht des Einzelteils, der Baugruppe oder des gesamten Objekts erfolgen.

Insbesondere können über die Ausgabeschnittstelle 24 wiederum Verknüpfungen zu dem Konstruktionssystem 36 für die dreidimensionale Darstellung und/oder zu dem Verwaltungssystem 38 für Produktionsdaten realisiert sein, so dass Daten, zum Beispiel Volumen, Oberfläche, Abmessungen, sowie freigegebene Prozesse, Lagerbestände, Lieferzeiten und Preise, aus den Datensätzen 14 der Einzelteile und Baugruppen in diese Systeme 36, 38 übernommen werden können.

Insbesondere können außerdem über die Ausgabeschnittstelle 24 Verknüpfungen zu einem Kommunikationssystem 40 für ein Intranet und/oder das Internet, beispielsweise ein Programm zum Versenden und Empfangen von Emails, realisiert sein. Dies ermöglicht eine Rückkopplung der Beurteilungen zur Optimierung der Konstruktion der Einzelteile oder Baugruppen bezüglich der Herstellbarkeit und der Beschaffbarkeit in der frühen Phase der Entwicklung.

Die Computereinrichtung 12 weist einen Gesamtgewichtsermittler 18 auf, welcher eingerichtet ist, Gesamtgewichte 152 von Baugruppen oder des Objekts anhand der in den Datensätzen 14 ausgewiesenen Gewichte der Einzelteile und Baugruppen zu ermitteln. Der Gesamtgewichtsermittler 18 verwendet zur Berechnung des Gesamtgewichts 152 von Baugruppen oder des Objekts gewogene Gewichte bevorzugt zu berechneten Gewichten und berechnete Gewichte bevorzugt zu Zielgewichten. Der Gesamtgewichtsermittler 18 ermittelt außerdem Informationen über Anteile der verwendeten Gewichtstypen an den ermittelten Gesamtgewichten und Informationen über das Verhältnis des ermittelten Gesamtgewichts des Objekts zum Zielgewicht des Objekts, sowie weitere KPIs, wie zuvor beschrieben. Der Gesamtgewichtsermittler 18 stellt die ermittelten / berechneten Informationen der Ausgabeschnittstelle 24 bereit.

Das Fertigungssystem 10 weist eine Produktionseinrichtung 30 auf, welche Daten von der Ausgabeschnittstelle 24 empfängt und anhand der empfangenen Daten tatsächliche Einzelteile 28 anfertigt, beispielsweise durch selektives Laserschmelzen, spanende Bearbeitung, Tiefziehen, Gießen, Spritzen, Drehen oder Ähnliches. Der Verfahrensschritt der Herstellung/Produktion kann vollautomatisch erfolgen, beispielsweise durch Auswertung der Datensätze 14, welche der Produktionseinrichtung 30 über die Ausgabeschnittstelle 24 bereitgestellt werden.

Das Fertigungssystem 10 weist eine Zusammenfügeeinrichtung 32 auf, welche eingerichtet ist, tatsächliche Einzelteile 28 zu tatsächlichen Baugruppen 34 zusammenzufügen. Auch der Verfahrensschritt der Zusammenfügung kann vollautomatisch erfolgen, beispielsweise durch Auswertung der Datensätze 14, welche der Zusammenfügeeinrichtung 32 über die Ausgabeschnittstelle 24 bereitgestellt werden. Der Zusammenfügeeinrichtung 32 müssen dabei nicht notwendigerweise tatsächliche Einzelteile 28 vorliegen, ebenso gut können mehrere tatsächliche Baugruppen 34 als Eingabe für übergeordnete tatsächliche Baugruppen 34 verarbeitet, d. h. zusammengefügt werden.

Das Fertigungssystem 10 umfasst eine Vermessungseinrichtung 26, welche zumindest dazu eingerichtet ist, die tatsächlichen Einzelteile 28 und die tatsächlichen Baugruppen 34 zu wiegen und die ermittelten Gewichte direkt oder indirekt der Computereinrichtung 12 über die Eingabeschnittstelle 22 bereitzustellen. Die Vermessungseinrichtung 26 kann darüber hinaus eingerichtet sein, weitere räumliche und/oder beispielsweise farbliche Parameter der tatsächlichen Einzelteile 28 und der tatsächlichen Baugruppen 34 der Computereinrichtung 12 über die Eingabeschnittstelle 22 bereitzustellen.

Die Computereinrichtung 12 umfasst einen Aktualisierer 20, der die Datensätze 14 der Einzelteile und/oder Baugruppen bezüglich ausgewiesener Gewichte und bezüglich räumlicher Parameter, Farbe und Ähnlichem aktualisiert. Der Aktualisierer 20 ist mit der Eingabeschnittstelle 22 verbunden, um deren Daten entsprechend zu empfangen und zu verarbeiten. Der Aktualisierer 20 kann gemäß einigen Ausführungsformen (nicht dargestellt) direkt mit der Ausgabeschnittstelle 24 kommunizieren und Darstellungen mit Anzeige der Änderungen zu vorigen Datenständen der Datensätze 14 erzeugen.

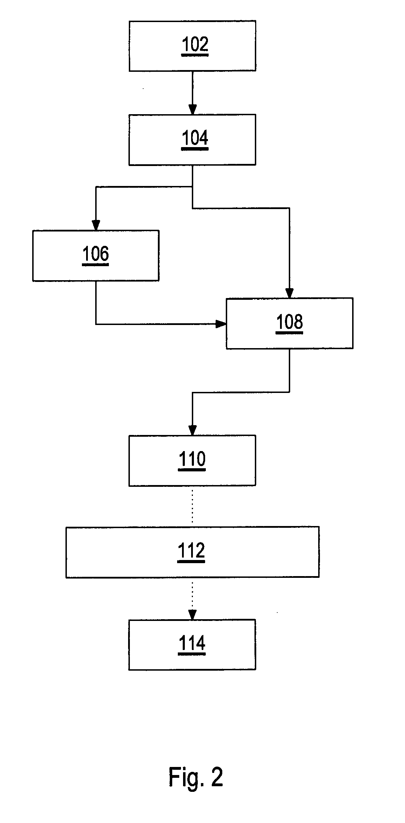

Figur 2 zeigt einen typischen Arbeitsablauf in einer Konstruktionsphase eines Einzelteils eines aus einer Vielzahl von Einzelteilen bestehenden Objekts.

Bei der Herstellung des Einzelteils, der Baugruppe und des Objekts sind typischerweise mehrere Personen involviert, beispielsweise ein Designer, ein Fertiger, ein Einkäufer, usw. aus einer Designabteilung, Fertigungsabteilung, Einkaufsabteilung, usw. Selbstverständlich müssen Handlungen dieser Personen nicht zwangsläufig realen Personen zugeordnet sein, sondern können durch entsprechende Vorrichtungen auch semiautomatisch oder vollständig automatisiert ablaufen.

Die Konstruktionsphase des Einzelteils kann wie folgt im Zusammenhang zur Herstellung des Objekts stehen: Zunächst wird ein Datensatz 14 zu einer obersten Baugruppe, d. h. zu dem herzustellenden Objekt angelegt, wobei diesem das auftragsgemäße Zielgewicht zugewiesen wird. Das Objekt wird in eine Anzahl erster Baugruppen untergliedert, denen als Designvorgabe, d. h. als Leitlinie des Designs, jeweils ein Zielgewicht zugewiesen wird. Diese ersten Baugruppen können weiter in zweite Baugruppen untergliedert sein, denen wiederum Zielgewichte zugewiesen werden. Die zweiten Baugruppen sind gegebenenfalls in dritte Baugruppen unterteilt, usw., bis schließlich Einzelteile zu designen sind. Das gesamte Objekt wird typischerweise von einem Team von Designern konstruiert. Jeder Designer ist dabei mit der Konstruktion einer oder mehrerer Baugruppen beschäftigt, deren Zielgewichte als Designvorgabe festgelegt sind. Der Designer konstruiert Unterbaugruppen und Einzelteile der Baugruppe. Der dargestellte und im Folgenden beschriebene Arbeitsablauf in der Konstruktionsphase eines Einzelteils wird analog auch bei der Herstellung von Baugruppen des aus der Vielzahl von Einzelteilen bestehenden Objekts angewendet.

Die Konstruktionsphase des Einzelteils beginnt in einem Schritt 102 mit einem Anlegen eines Designs eines Einzelteils durch einen Designer. In einem Schritt 104 gibt der Designer für das Einzelteil ein OK für einen Vorab-Check. Die Spezifikation des Designers umfasst dabei nicht nur die räumlichen Parameter und Angaben zu Material und Dichte, sondern beispielsweise auch Fertigungsanweisungen, wie die Angabe des Herstellungsverfahrens oder auch Angaben zu Kosten. Dem Designer ist dabei bereits bekannt, ob das Einzelteil von einem firmeninternen Fertiger hergestellt werden kann oder ob es extern beschafft werden muss. Dies folgt beispielsweise aus seinen Fertigungsanweisungen. Wenn z. B. ein Prozess wie Drehen, Gießen oder Ähnliches von dem firmeninternen Fertiger nicht umgesetzt werden kann, dann ist dies im Konstruktionsmodul hinterlegt und wird dem Designer angezeigt. Für den Fall, dass das Einzelteil vom firmeninternen Fertiger möglicherweise hergestellt werden kann, wird der firmeninterne Fertiger involviert, andernfalls direkt ein Einkäufer.

In einem Schritt 106 gibt der firmeninterne Fertiger des Einzelteils ein Vorab-OK, wenn dieses gemäß den Vorgaben des Designers erzeugbar ist, insbesondere auch, wenn dies im vorgesehenen Kostenrahmen erfolgen kann. Ist dies nicht der Fall, wird der Designer angewiesen, die Spezifikation zu ändern und der Arbeitsablauf fällt auf Schritt 104 zurück.

In einem Schritt 108 gibt der Einkäufer des Einzelteils ein Vorab-OK, wenn dieses gemäß den Vorgaben des Designers beschaffbar ist. Ist dies nicht der Fall, wird der Designer angewiesen die Spezifikation ändern und der Arbeitsablauf fällt auf Schritt 104 zurück. Ist das Vorab-OK des firmeninternen Fertigers im Schritt 106 schon vorhanden, dann ist für den Einkäufer an dieser Stelle nicht notwendigerweise mehr viel zu tun. Allerdings dient das Vorab-OK des Einkäufers auch der Dokumentation des Projekts und der Ausgabe von KPIs, auf die im Folgenden mit Bezug zu den Figuren 3 - 5 näher eingegangen wird.

In einem Schritt 110 erfolgt ein OK des Designers. Zu diesem Zeitpunkt kann beispielsweise der Einkäufer oder der firmeninterne Fertiger mit einer hohen Wahrscheinlichkeit davon ausgehen, dass beispielsweise Rohmaterial, Normteile oder Standardteile für das Einzelteil beschafft werden können, so dass die Fertigung in Auftrag gegeben werden kann oder dass Fertigungshilfsmittel wie Tiefziehwerkzeuge oder Gussformen in Auftrag gegeben werden können.

Während das Verfahren für jedes Einzelteil und für jede Baugruppe des aus der Vielzahl von Einzelteilen bestehenden Objekts gemäß den Schritten 102 bis 110 parallel durchgeführt wird, bis in einem Schritt 114 eine Ablösung der virtuellen Daten des Einzelteils oder der Baugruppe durch Realdaten erfolgt, kann in einem Zwischenschritt 112 jederzeit ein Reifegrad des Objekts ausgegeben werden, insbesondere anhand von KPIs, wie im Folgenden mit Bezug zu den Figuren 3 - 5 näher erläutert wird.

Zum Zeitpunkt im Schritt 114 liegt ein tatsächliches Einzelteil 28 vor, dessen gewogenes Gewicht dem Designer bereitgestellt wird. Das tatsächliche Einzelteil 28 wird beispielsweise von der Vermessungseinrichtung 26 gewogen.

Figur 3 zeigt ein erstes Diagramm zur Darstellung eines Reifegrades des Objekts im zeitlichen Verlauf. Der Reifegrad des Objekts wird über einen Zeitraum von der 21. bis zur 42. Woche dargestellt, wobei dies lediglich beispielhaft ist.

Eine erste Kurve zeigt eine Gesamtanzahl 122 der Einzelteile und Baugruppen, aus welchen das herzustellende Objekt besteht. Für das vorliegende Beispiel umfasst das Objekt ca. 320 Einzelteile und Baugruppen.

Eine weitere Kurve zeigt eine Anzahl 124 derjenigen Einzelteile und Baugruppen, für die im Schritt 104 der Designer das OK für den Vorab-Check gegeben hat. Während zu Beginn noch weniger als 200 Einzelteile und Baugruppen in diesem Zustand waren, wurde dieser Status nach 32 Wochen für die Gesamtanzahl 122 der Einzelteile und Baugruppen erreicht.

Unterhalb der Kurve mit der Anzahl 124 derjenigen Einzelteile und Baugruppen, für die der Designer das OK für den Vorab-Check gegeben hat, liegt eine weitere Kurve, welche eine Anzahl 126 derjenigen Einzelteile und Baugruppen darstellt, für die im Schritt 106 der Fertiger das Vorab-OK gegeben hat.

Unterhalb der Kurve mit der Anzahl 126 derjenigen Einzelteile und Baugruppen, für die der Fertiger das Vorab-OK gegeben hat, liegt eine weitere Kurve, welche eine Anzahl 128 derjenigen Einzelteile und Baugruppen darstellt, für die im Schritt 108 der Einkäufer das Vorab-OK gegeben hat.

Unterhalb der Kurve mit der Anzahl 128 derjenigen Einzelteile und Baugruppen, für die der Einkäufer das Vorab-OK gegeben hat, liegt eine weitere Kurve, welche eine Anzahl 130 derjenigen Einzelteile und Baugruppen darstellt, für die im Schritt 110 der Designer das OK gegeben hat.

Unterhalb der Kurve mit der Anzahl 130 derjenigen Einzelteile und Baugruppen, für die der Designer das OK gegeben hat, liegt eine weitere Kurve, welche eine Anzahl 132 derjenigen Einzelteile und Baugruppen darstellt, für die im Schritt 114 die Ablösung der virtuellen Daten des Einzelteils oder der Baugruppe durch Realdaten erfolgt ist, d. h deren Datensatz 14 insbesondere auch ein gewogenes Gewicht ausweist.

Unter strenger Befolgung des mit Bezug zu Figur 2 beschriebenen Prinzips werden die Kurven 122, 124, 126, 128, 130, 132 sich lediglich berühren und nicht schneiden.

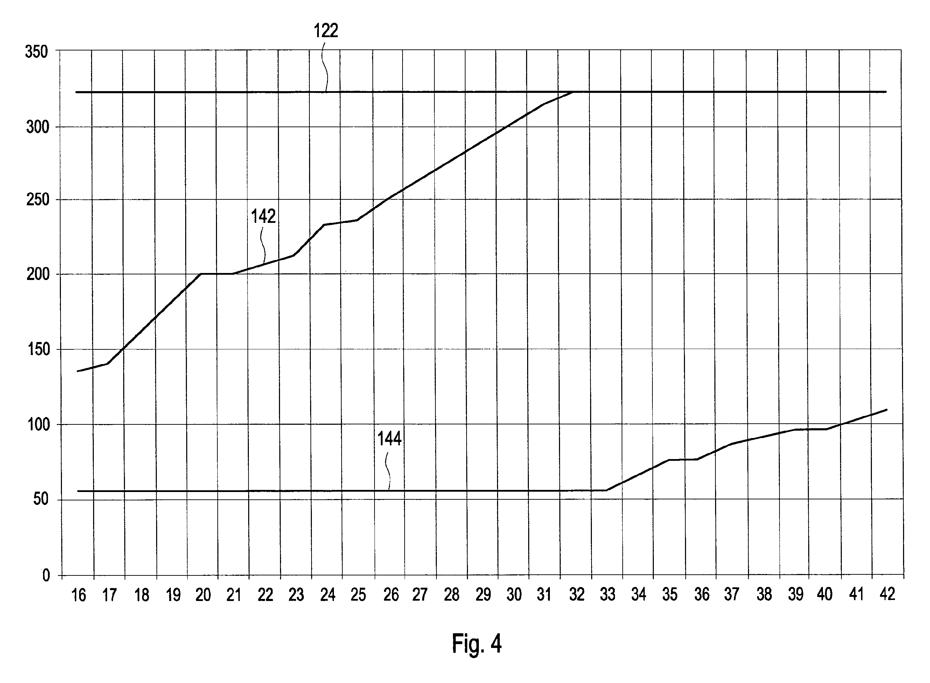

Figur 4 zeigt ein weiteres Diagramm zur Darstellung des Reifegrades des Objekts im zeitlichen Verlauf, nämlich den Verlauf des Gewichts als Schlüsselindikator (KPI) für den Reifegrad des Objekts. Dargestellt ist dasselbe Beispiel wie in Figur 3 mit den 320 Einzelteilen und Baugruppen. Der dargestellte Zeitraum umfasst hier beispielhaft die Wochen 16 bis 42.

Eine erste Kurve zeigt wiederum die Gesamtanzahl 122 der Einzelteile und Baugruppen, aus welchen das herzustellende Objekt besteht.

Eine zweite Kurve zeigt eine Anzahl 142 derjenigen Einzelteile und Baugruppen, deren Datensatz 14 ein gewogenes oder ein berechnetes Gewicht ausweist, d. h. für die ein gewogenes oder ein berechnetes Gewicht im Konstruktionsmodul verfügbar ist. Die betroffenen Einzelteile oder Baugruppen sind folglich nicht zwangsläufig tatsächliche Einzelteile 28 oder tatsächliche Baugruppen 34 im Sinne der Erfindung.

Eine dritte Kurve zeigt eine Anzahl 144 derjenigen Einzelteile und Baugruppen, deren Datensatz 14 ein gewogenes Gewicht ausweist. Die Information bezieht sich nicht nur auf die tatsächlichen Einzelteile 28 oder die tatsächlichen Baugruppen 34, welche beispielsweise von der Vermessungseinrichtung 26 gewogen wurden, sondern umfasst auch die in der obersten Baugruppe enthaltenen Standardteile aus vorherigen Projekten, die dem Konstruktionsmodul mit bereits hinterlegten Gewichten vorliegen, entsprechend den möglichen Gewichtstypen gewogenes Gewicht, berechnetes Gewicht und Zielgewicht. Nebenbei bemerkt, erklärt sich hierdurch eine Diskrepanz zu der Kurve in Figur 3, welche die Anzahl 132 derjenigen Einzelteile und Baugruppen darstellt, für die im Schritt 114 die Ablösung der virtuellen Daten des Einzelteils oder der Baugruppe durch Realdaten erfolgt ist.

Das in Figur 4 dargestellte Szenario ist auf die Kosten als KPI für den Reifegrad des Objekts übertragbar. In diesem Zusammenhang wird eine Kurve diejenigen Einzelteile und Baugruppen anzeigen, für welche tatsächliche Kosten nach der Herstellung bekannt sind oder für welche Schätzwerte zur Verfügung stehen. Eine weitere Kurve wird die Anzahl derjenigen Einzelteile oder Baugruppen zeigen, für welche tatsächliche Kosten bekannt sind.

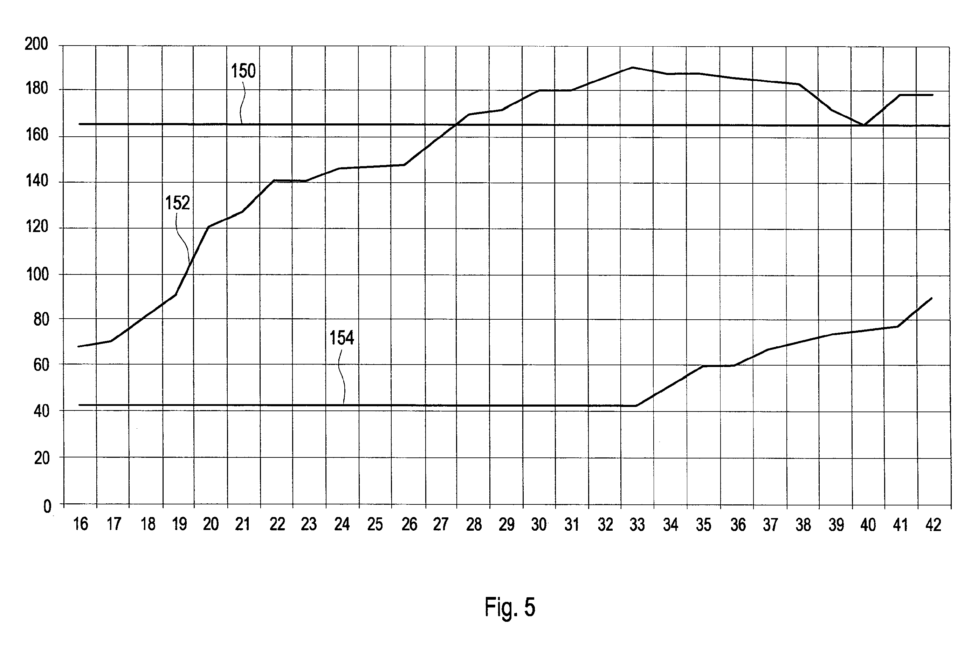

Figur 5 bezieht sich auf das Beispiel aus Figur 3 und 4 und stellt von Woche 16 bis zur Woche 42 ein Zielgewicht 150 des Objekts, ein Gesamtgewicht 152 des Objekts und ein Gesamtgewicht 154 der tatsächlichen Einzelteile 28 und tatsächlichen Baugruppen 34 des betrachteten Objekts dar.

Das Gesamtgewicht 152 des Objekts wird dabei aus dem gewogenen Gewicht, dem berechneten Gewicht und dem Zielgewicht der Einzelteile und der Baugruppen gebildet, entsprechend der beschriebenen Vorrangsregelung, dass zunächst auf die gewogenen Gewichte der tatsächlichen Einzelteile 28 und tatsächlichen Baugruppen 34 zugegriffen wird, falls dieses nicht vorhanden ist, auf das berechnete Gewicht, und falls auch dieses nicht vorhanden ist, auf das Zielgewicht oder auch auf einen Standardwert. Das gewogene Gewicht jedes tatsächlichen Einzelteils 28 wird dabei, wie beschrieben, der Baugruppe mit diesem Einzelteil stets bevorzugt, bis eine tatsächliche Baugruppe 34 vorliegt, die das betroffene tatsächliche Einzelteil 28 enthält. Umgekehrt gilt, dass wenn eine tatsächliche Baugruppe 34 vorliegt, dann die Angaben für die in der tatsächlichen Baugruppe 34 enthaltenen Unterbaugruppen und Einzelteile nicht mehr berücksichtigt werden.

Aus Figur 5 sind zu jedem Zeitpunkt Informationen über das Verhältnis des Gesamtgewichts 154 der tatsächlichen Einzelteile 28 und tatsächlichen Baugruppen 34 zu dem Gesamtgewicht 152 des Objekts als KPIs ablesbar, außerdem Informationen über das Verhältnis des Gesamtgewichts 154 der tatsächlichen Einzelteile 28 und tatsächlichen Baugruppen 34 zum Zielgewicht 150 des Objekts, sowie Informationen über das Verhältnis des Gesamtgewichts 152 des Objekts zum Zielgewicht 150 des Objekts.

In Figur 5 übertrifft das Gesamtgewicht 152 des Objekts das Zielgewicht 150 des Objekts am 28. Tag. Eine geringfügige Überschreitung des Zielgewichts 150 des Objekts zum Projektabschluss wird oftmals nicht toleriert, so dass der Designer Einschränkungen bei der Konstruktion neuer Einzelteile oder Baugruppen hinnehmen und oftmals bestehende Designs von Einzelteilen oder Baugruppen ändern muss. Mit den Maßnahmen der Erfindung wird diesem Zustand sehr effizient entgegengewirkt.

## Patentansprüche

1. Computerimplementiertes Verfahren zur Herstellung eines Objekts, welches aus einer Vielzahl von Einzelteilen und Baugruppen besteht, insbesondere eines Luft- oder Raumfahrtkörpers,
wobei eine zeitliche Überlappung einer Konstruktionsphase und einer Produktionsphase des Objekts vorliegt,
wobei in der Konstruktionsphase zu jedem Einzelteil, zu jeder Baugruppe und zu dem Objekt ein Datensatz (14) erstellt wird,
wobei der Datensatz (14) eines jeden Einzelteils und einer jeden Baugruppe als Gewichtstypen jeweils ein Zielgewicht, ein berechnetes Gewicht und ein gewogenes Gewicht ausweisen kann,
wobei in der Produktionsphase tatsächliche Einzelteile (28) und tatsächliche Baugruppen (34) angefertigt und gewogen werden,
**dadurch gekennzeichnet, dass**
in der Konstruktionsphase Gesamtgewichte (152) der Baugruppen und/oder des Objekts anhand der Datensätze (14) der Einzelteile und Baugruppen ermittelt werden,
wobei gewogene Gewichte bevorzugt zu berechneten Gewichten und berechnete Gewichte bevorzugt zu Zielgewichten zur Ermittlung der Gesamtgewichte (152) der Baugruppen und/oder des Objekts verwendet werden, und
dass Informationen über Anteile der verwendeten Gewichtstypen an den ermittelten Gesamtgewichten (152) ermittelt und bereitgestellt werden.

2. Computerimplementiertes Verfahren nach Anspruch 1, **dadurch gekennzeichnet, dass** der Datensatz (14) des Objekts ein Zielgewicht (150) des Objekts ausweist und Informationen über das Verhältnis des ermittelten Gesamtgewichts (152) des Objekts zum Zielgewicht (150) des Objekts ermittelt und bereitgestellt werden.

3. Computerimplementiertes Verfahren nach Anspruch 2, **dadurch gekennzeichnet, dass** außerdem Informationen
über das Verhältnis einer Anzahl (142) der Einzelteile und Baugruppen, deren gewogene oder berechnete Gewichte vorliegen, zu einer Gesamtanzahl (122) der Einzelteile und Baugruppen und/oder
über das Verhältnis einer Anzahl (144) der Einzelteile und Baugruppen, deren gewogene Gewichte vorliegen, zu der Gesamtanzahl (122) der Einzelteile und Baugruppen und/oder
über das Verhältnis der Anzahl (142) der Einzelteile und Baugruppen, deren gewogene oder berechnete Gewichte vorliegen, zu der Anzahl (144) der Einzelteile und Baugruppen, deren gewogene Gewichte vorliegen ermittelt und bereitgestellt werden.

4. Computerimplementiertes Verfahren nach einem der vorhergehenden Ansprüche, **dadurch gekennzeichnet, dass** in der Produktionsphase gewogene Gewichte von tatsächlichen Einzelteilen (28) oder tatsächlichen Baugruppen (34) in die entsprechenden Datensätze (14) manuell eingebbar sind oder automatisch rückeingespeist werden.

5. Computerimplementiertes Verfahren nach einem der vorhergehenden Ansprüche, **dadurch gekennzeichnet, dass** in der Produktionsphase die tatsächlichen Einzelteile (28) und/oder die tatsächlichen Baugruppen (34) anhand der Datensätze (14) vollautomatisch, semiautomatisch oder manuell hergestellt werden.

6. Computerimplementiertes Verfahren nach einem der vorhergehenden Ansprüche, **dadurch gekennzeichnet, dass** bei der Ermittlung der Gesamtgewichte (152) der Baugruppen und/oder des Objekts das Gewicht von zu Baugruppen gruppierten Einzelteilen anstelle des Gewichts der betroffenen Einzelteile verwendet wird.

7. Computerimplementiertes Verfahren nach einem der vorhergehenden. Ansprüche, **dadurch gekennzeichnet, dass** bei der Ermittlung der Gesamtgewichte (152) der Baugruppen und/oder des Objekts Gewichtsveränderungen durch Zusammenfügungen der Einzelteile berücksichtigt werden.

8. Konstruktionsmodul zum Einsatz bei einer Herstellung eines Objekts, welches aus einer Vielzahl von Einzelteilen besteht, insbesondere eines Luft- oder Raumfahrtkörpers, bei dessen Herstellung eine zeitliche Überlappung einer Konstruktionsphase und einer Produktionsphase des Objekts vorliegt,
wobei das Konstruktionsmodul auf einer programmierbaren Computereinrichtung (12) ausgeführt wird, aufweisend
einen Datensatz (14) zu jedem Einzelteil, zu jeder Baugruppe und zu dem Objekt, wobei der Datensatz (14) eines jeden Einzelteils und einer jeden Baugruppe als Gewichtstypen jeweils ein Zielgewicht, ein berechnetes Gewicht und ein gewogenes Gewicht ausweisen kann,
**dadurch gekennzeichnet, dass**
das Konstruktionsmodul einen Gesamtgewichtsermittler (18) aufweist, welcher eingerichtet ist, Gesamtgewichte (152) der Baugruppen und/oder des Objekts anhand der Datensätze (14) der Einzelteile und Baugruppen zu ermitteln,
wobei der Gesamtgewichtsermittler (18) gewogene Gewichte bevorzugt zu berechneten Gewichten und berechnete Gewichte bevorzugt zu Zielgewichten zur Ermittlung der Gesamtgewichte (152) der Baugruppen und/oder des Objekts verwendet, und dass
der Gesamtgewichtsermittler (18) Informationen über Anteile der verwendeten Gewichtstypen an den ermittelten Gesamtgewichten (152) ermittelt und bereitstellt.

9. Konstruktionsmodul nach Anspruch 8 mit einem Aktualisierer (20), der eingerichtet ist, die Datensätze (14) zumindest bezüglich berechneter und gewogener Gewichte zu aktualisieren.

10. Konstruktionsmodul nach einem der Ansprüche 8 oder 9 mit Verknüpfungen zu einem oder mehreren Konstruktionssystemen (36) für eine dreidimensionale Darstellung und/oder mit Verknüpfungen zu einer oder mehreren Verwaltungssystemen (38) für Produktionsdaten, aus welchen Daten in die Datensätze (14) übernommen werden können.

11. Konstruktionsmodul nach einem der Ansprüche 8 bis 10 mit einem Modul, welches die Verknüpfung von relevanten Parametern im Zuge einer Erstanwendung eines entsprechenden Datensatzes (14) zu speichern ermöglicht, um diese bei weiteren Anwendungen für andere Datensätze (14) als Suchmatrix zu verwenden.

12. Konstruktionsmodul nach einem der Ansprüche 8 bis 11 mit einem Modul zur Ausgabe von Daten aus den Datensätzen (14) der Einzelteile, Baugruppen oder des Objekts in Form einer Kurzbeschreibung mit relevanten Daten für an der Erstellung oder Bewertung der Datensätze (14) beteiligte Personen.

13. Konstruktionsmodul nach einem der Ansprüche 8 bis 12 mit einem Modul zur automatischen Information von an der Erstellung oder Bewertung der Datensätze (14) beteiligten Personen bei jeder Änderung des Inhalts der Datensätze (14) über ein Kommunikationssystem (40) für ein Intranet und/oder das Internet.

14. Fertigungssystem (10) zur Herstellung eines Objekts, welches aus einer Vielzahl von Einzelteilen besteht, insbesondere eines Luft- oder Raumfahrtkörpers, mit einer programmierbaren Computereinrichtung (12), welche ein Konstruktionsmodul nach einem der Ansprüche 8 bis 13 aufweist.

15. Fertigungssystem (10) nach Anspruch 14 mit einer Vermessungseinrichtung (26), welche zumindest dazu eingerichtet ist, tatsächliche Einzelteile (28) und tatsächliche Baugruppen (34) zu wiegen, und/oder mit einer Produktionseinrichtung (30), welche tatsächliche Einzelteile (28) oder tatsächliche Baugruppen (34) anhand entsprechender Datensätze (14) anfertigt, und/oder mit einer Zusammenfügeeinrichtung (32), welche tatsächliche Einzelteile (28) zu tatsächlichen Baugruppen (34) und/oder mehrere tatsächlichen Baugruppen (34) zu übergeordneten tatsächlichen Baugruppen (34) zusammenfügt.
